# EUROPEAN PATENT APPLICATION

(11) **EP 1 876 147 A1**
(43) Date of publication of application: **09.01.2008**
(21) Application number: 06253520.8
(22) Date of filing: 05.07.2006
(51) Int. Cl.: C02F 1/22, B01D 9/00, C02F 103/08

(54) **Desalination process**

(71) Applicant: BP EXPLORATION OPERATING COMPANY LIMITED, Sunbury-on-Thames, Middlesex TW16 7BP (GB)
(72) Inventor: Woodhams, Andrew BP Exploration Operating Company Ltd., Sunbury on Thamas, Middlesex TW 16 7LN (GB); McLaren, Stephen BP Exploration Operating Company Ltd., Sunbury on Thamas, Middlesex TW16 87LN (GB)
(74) Representative: Hymers, Ronald Robson

(57) **Abstract**

A water desalination process which comprises:
(i) providing a stream of brine to a crystalliser;
(ii) providing a stream of liquefied natural gas as a coolant for said crystalliser, and cooling said brine to produce a mixture of ice crystals and concentrated brine; and
(iii) transferring at least part of said mixture to a defined type of wash column. In an alternative embodiment, the process comprises

(i) providing a stream of brine to a crystalliser;
(ii) providing a stream of liquefied natural gas, heat exchanging said stream against a secondary coolant which is a fluid initially at a higher temperature than said stream of liquefied natural gas, providing said cooled fluid as a coolant for said crystalliser, and cooling said brine to produce a mixture of ice crystals and concentrated brine; and
(iii) transferring at least part of said mixture to a wash column in which said mixture is washed with water and ice crystals are recovered.

## Description

The present invention relates to a water desalination process, i.e. a process for increasing the salt content of a brine while producing water of increased purity.

Desalination processes are known in which saline solutions are subjected to cold to produce a mixture of ice and more concentrated saline solution. The ice crystals may then be separated from the concentrated saline, and melted to produce fresh (or sweet) water. Such processes are generally known as freeze desalination.

Liquefied natural gas (LNG) is typically transported by sea into many countries, where it is received at a terminal and subject to a vaporisation process before being fed into a pipeline for domestic or industrial use. LNG is cold (typically from -162°C at atmospheric pressure to temperatures between -162°C and -100°C at pressures between atmospheric pressure and 12 barg), and during vaporisation, this cold is released. Various processes have been proposed to harness this cold; for example GB 1 397 332 discloses that LNG can be heat-exchanged with saline solution in a freeze desalination process. However, one disadvantage of using LNG as a coolant in a freeze desalination process is that its temperature may be so low that salt crystals precipitate out from the saline solution, contaminating the ice crystals formed during freezing.

A major problem in freeze desalination processes is that it is difficult to separate the ice crystals from the concentrated saline solution. Simple filtration of the mixture is not in practice feasible, as the saline solution entrained with the crystals is difficult to remove. Various wash separation methods have therefore been proposed. For example, GB 2 023 564 (which is equivalent to NL 7 904 919) discloses a wash column which can be used for the freeze concentration of sea water, which comprises forming a packed bed of ice crystals which is washed with water and continuously moved to form a stable washfront, and continuously disintegrating the bed using a scraper.

EP 0097405 describes a wash column for concentrating a suspension in which filters are provided in a particular configuration through which liquid may be removed from the column. Concentrated suspension is removed from the lower part of the column, and there is no disclosure of the use of the column for the separation of ice crystals from saline solution. WO 03/063997 describes a further modification of a column of the type described in GB 2 023 564. In this document, a suspension of solid particles in a liquid is processed in such a way that a packed bed of the particles is washed with a liquid, the bed is continuously disintegrated at least partly under the influence of the washing liquid, and a product stream comprising particles incorporated in the washing liquid is removed from the column. The column of WO 03/063997 is said to be useful for processing a slurry of crystals in a contaminated melt, or for processing a crystal slurry comprising a solvent having crystallized particles therein, for example an aqueous saturated saline solution containing salt crystals. There is no disclosure of the use of the column for the separation of ice crystals from saline solution.

We have now found improved integrated processes for the use of LNG to produce desalinated water. Accordingly, in a first embodiment, the present invention provides a water desalination process, which comprises:
(i) providing a stream of brine to a crystalliser;
(ii) providing a stream of liquefied natural gas as a coolant for said crystalliser, and cooling said brine to produce a mixture of ice crystals and concentrated brine; and
(iii) transferring at least part of said mixture to a wash column comprising a concentration zone provided with (a) means for supply of said mixture, (b) one or more tubes extending from the lower portion of the concentration zone in axial direction through the concentration zone towards its upper region, one or more filtering elements being located in the wall of each tube such that the only direct connection between the interior of the tube and the concentration zone is provided by said filtering element(s); and (c) means for the removal of concentrated brine having passed through said filtering element(s); in which column ice crystals are separated from said mixture by a process which comprises:
   - supplying said mixture under conditions such that a packed bed of ice crystals forms near said filtering element(s);
   - forming a washing front at the upper portion of the concentration zone by bringing a stream of washing water in countercurrent to the ice crystals in the bed, the bed being subjected to a generally upward movement in the direction of said washing front;
   - disintegrating a portion of said bed, such that ice crystals are incorporated in the washing water to form a suspension; and
   - removing at least part of said suspension from an upper portion of said wash column.

The invention further provides, in a second embodiment, a water desalination process, which comprises:
(i) providing a stream of brine to a crystalliser;
(ii) providing a stream of liquefied natural gas, heat exchanging said stream against a fluid initially at a higher temperature than said stream of liquefied natural gas, providing said cooled fluid as a coolant for said crystalliser, and cooling said brine to produce a mixture of ice crystals and concentrated brine; and
(iii) transferring at least part of said mixture to a wash column in which said mixture is washed with water and ice crystals are recovered. Step (iii) is preferably carried out using a wash column comprising a concentration zone provided with (a) means for supply of said mixture, (b) one or more tubes extending from the lower portion of the concentration zone in axial direction through the concentration zone towards its upper region, one or more filtering elements being located in the wall of each tube such that the only direct connection between the interior of the tube and the concentration zone is provided by said filtering element(s); and (c) means for the removal of concentrated brine having passed through said filtering element(s); and the ice crystals are separated from said mixture in the column by a process which comprises:
   - filtering said mixture using at least one filtering element under conditions such that a packed bed of ice crystals forms near said filtering element;
   - forming a washing front by bringing a stream of washing water in countercurrent to the ice crystals in the bed, the bed being subjected to a generally upward movement in the direction of said washing front;
   - disintegrating a portion of said bed, such that ice crystals are incorporated in the washing water to form a suspension; and
   - removing at least part of said suspension from an upper portion of said wash column.

The invention further provides, in a third embodiment, apparatus for use in a water desalination process, which comprises:
(1) a heat exchanger provided with cool side input means for liquefied natural gas, and warm side input means for a secondary coolant fluid; (2) a crystalliser having input means for a stream of brine and output means for a mixture of ice crystals and concentrated brine, and means for cooling said crystalliser using said secondary coolant fluid from heat exchanger (1); and (3) a wash column comprising a concentration zone provided with (a) means for supply of said mixture of ice crystals and concentrated brine from crystalliser (2), (b) one or more tubes extending from the lower portion of the concentration zone in axial direction through the concentration zone towards its upper region, one or more filtering elements being located in the wall of each tube such that the only direct connection between the interior of the tube and the concentration zone is provided by said filtering element(s); and (c) means for the removal of concentrated brine having in use passed through said filtering element(s); such that in use, ice crystals are separated from said mixture in said column by a process which comprises:
   - supplying said mixture under conditions such that a packed bed of ice crystals forms near said filtering element(s);
   - forming a washing front at the upper portion of the concentration zone by bringing a stream of washing water in countercurrent to the ice crystals in the bed, the bed being subjected to a generally upward movement in the direction of said washing front;
   - disintegrating a portion of said bed, such that ice crystals are incorporated in the washing water to form a suspension; and
   - removing at least part of said suspension from an upper portion of said wash column.

The aqueous feed to the process of the invention may be any desired brine, but is preferably sea water, which may or may not have undergone preliminary processing, for example filtering or disinfecting. The process of the invention provides an elegant process for the conversion of sea water into lower salinity water, and is capable of providing water which is suitable for drinking. Indeed, the level of purity of the produced water may be too high for drinking water, because drinking water generally requires a certain mineral content. In this case, minerals may be added to the produced water as desired. One measure of the purity of water intended for general use, and especially for drinking, is the conductivity. Preferably the process of the invention is operated under conditions such that the product water has a conductivity of less than 125 mS/m at 20°C, preferably less than 30 mS/m at 20°C. In comparison, sea water typically has a conductivity of 10²-10³ mS/m or even higher. The process of the invention is distinguished from many prior art processes in the level of purity of the water which may be produced.

Suitably, the feed stream of LNG is supplied at a temperature in the range of from -162°C to -100°C, and a pressure of from 1 barg to 12 barg. The LNG may if desired be used as the only coolant for the crystalliser, but preferably the LNG is used as an indirect coolant for the crystalliser, i.e. it is used to cool a secondary coolant, which is then in turn used to cool the crystalliser and hence the brine feed. Any suitable secondary coolant may be used, for example an organic liquid, for example any proprietory heat transfer fluid; evaporating propane; a liquid hydrocarbon, for example 2- methyl-butane, 2-methylpentane, 1-pentene, 2,3-dimethyl-1-butene, or 3-methylhexane; ethylene glycol/water or ethanol/water mixtures; salts such as potassium formate; or a cold vapour such as nitrogen which may be used for direct contact crystallisation. The heat transfer from the LNG to the secondary coolant may be accomplished by any suitable method, for example using a conventional heat exchanger or vaporiser. The secondary coolant is preferably cooled to a temperature in the range of from -50°C to -20°C, preferably from -40°C to -20°C. It is then supplied to the crystalliser where, after cooling the brine, it typically has a temperature in the range of from -30°C to -10°C. It may then be recycled back for further heat exchange with the LNG feed.

Any type of crystalliser may be used in the process of the invention. For example, the crystalliser may be a fluidised bed heat exchanger, a direct contact crystalliser in which a cold gas is bubbled through the brine, or, preferably, a scraped surface crystalliser in which a scraper removes frozen ice crystals from a cooled surface. Preferably the crystalliser is a vessel provided with a jacket through which a liquid can circulate. This liquid may be LNG, but it is preferably a secondary coolant, said liquid having been cooled to the desired temperature by heat exchange with the LNG feed to the process as described above. The brine in the crystalliser is preferably cooled to a temperature in the range of from -2 to -10°C, especially from -3 to -7°C.

On leaving the crystalliser, the suspension of ice crystals in concentrated brine is transferred to a wash column, either directly or via a stirred holding tank. This wash column contains one or more filtering elements which allow a packed bed of solid particles to be formed. This packed bed forms near, i.e. around, on, just above or just below the filtering element, depending on the configuration, and is subject to upward movement. The upward movement of the bed may for example be effected by hydraulic pressure and/or by using a mechanical auxiliary means such as a screw or a piston. Washing water is introduced into the column, this washing water being water of a higher purity than the original brine feed. In a preferred embodiment, it is recycled melt water produced by melting ice crystals produced as product from the process of the invention, and is thus of a similar level of purity to the ice crystals being processed. A portion of the washing water flows generally downwards in the column, i.e. against the direction of motion of the packed bed, which is generally upwards.

A portion of the packed bed of ice crystals is disintegrated during the washing process, preferably continuously. This disintegration may be carried out using a mechanical disintegrator, for example a scraper, by supplying heat to melt ice crystals present in the bed, or by disintegrating the bed at least partly under the influence of the washing water. In the latter case, the impulse of the washing water for disintegrating the packed bed can be generated by pumping the washing water around and directing it, in a suitable manner, towards the portion of the bed that is to be disintegrated, for example by introducing it tangentially along the inside circumference of the flushing chamber (i.e. the space in which the ice crystals detached from the packed bed are mixed in the washing water), or by using nozzles from which the washing water can stream as a powerful jet. Preferably a mechanical disintegrator such as a scraper is used.

Preferably, one or more filtering elements, preferably of circular cross section, are arranged vertically and are provided with means for discharging the concentrated brine. Suitably, the filtering element(s) are arranged within tubes extending from the lower portion of the concentration zone in axial direction through the concentration zone towards its upper region, such that the only direct connection between the interior of the tube and the concentration zone is via the tube and the filtering element(s). The concentrated brine can thence be discharged from the column. Preferably, several filtering elements are located in tubes evenly distributed over the cross section of the column; for example, the column may be packed with a plurality of filter elements contained in filter tubes, or alternatively the tubes may only cover a small portion of the cross section of the column. Preferably, each of the filtering elements is provided with a rod or tube for guiding the bed upwards in the column, each rod or tube having a cross section which is at most equal to the filtering element above which it has been placed.

The suspension of ice crystals and concentrated brine from the crystalliser is preferably supplied continuously to the wash column, and the concentrated brine and the washed ice crystals are preferably continuously removed from the column, so that the packed bed of ice crystals moves upwards in the column, i.e. in the direction of the washing front. The exact position of the washing front can be set by adjusting the pressures in the column. Any suitable pressure may be used, depending upon the exact configuration and the throughput desired; for example, the column may be operated at a pressure in the range of from 2 to 35 barg.

If desired, two or more columns may be used in a cascade arrangement.

Further details of columns suitable for use in the process of the present invention may be found in EP 0097405 and WO 03/063997.

The ice crystals in the product stream are converted into liquid water by any suitable means, for example by heating with steam, by heat exchanging against a suitable liquid, for example sea water, or simply by being allowed to stand for a sufficient period of time at ambient temperature. The concentrated brine obtained as effluent may be discharged, or may be used in other parts of the process. It may for example be partially recycled to the crystalliser or, as it is removed from the wash column at a temperature lower than ambient, it may be used to cool fresh brine entering the crystalliser.

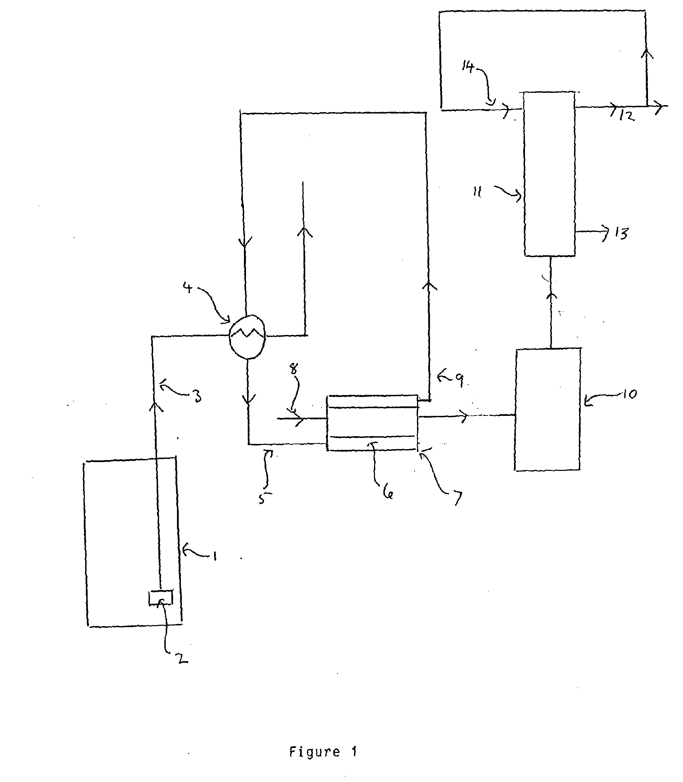

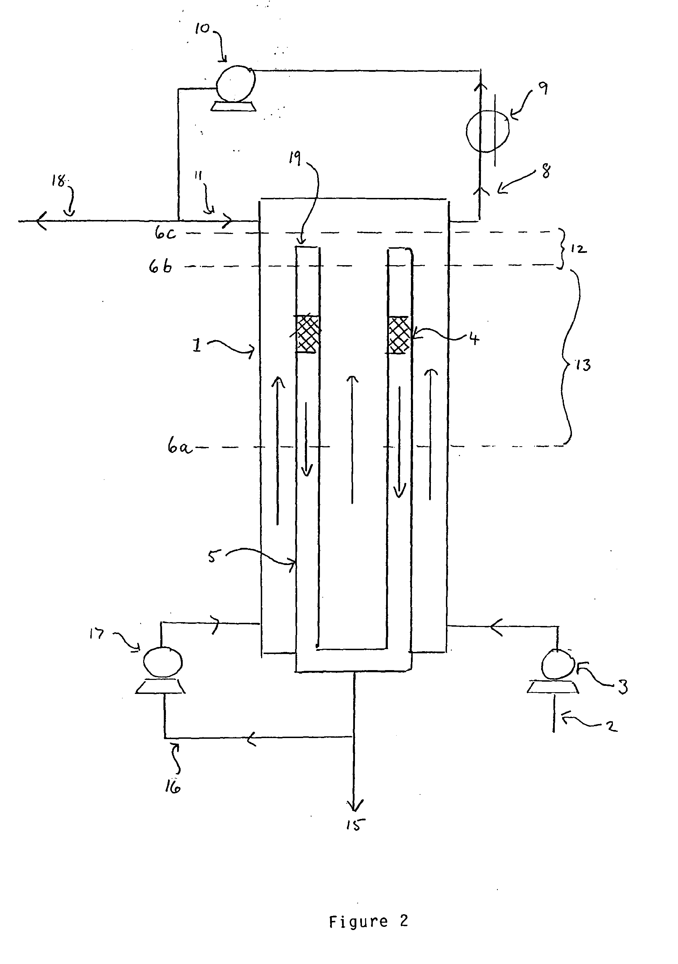

The invention will now be illustrated with reference to the accompanying drawings, in which Figure 1 illustrates a flow diagram of one embodiment of the process of the invention and Figure 2 shows a cross section of a preferred wash column 11 of Figure 1.

Figure 1 shows a flow scheme for one embodiment of the process of the invention. A tank (1) contains LNG which is transferred by an in-tank pump (2) via line (3) to heat exchanger (4). If desired, this transfer may be accomplished via a recondenser (not shown) in which the LNG is contacted with pressurised boil-off gases from the tank 1. In the heat exchanger (4), the LNG cools a secondary coolant which is transferred via line (5) to the jacket (6) of a scraped surface heat exchanger crystalliser (7), and which is then recycled via line (9) to heat exchanger (4). In alternative embodiments (not shown) the secondary coolant could be supplied to the shell side of a fluidised bed heat exchanger, or directly into the brine using a direct contact heat exchanger. A feed stream of brine enters crystalliser (7) via line (8), and is cooled to produce a mixture of ice crystals and concentrated brine. This mixture exits the crystalliser and is transferred to a wash column (11) via a stirred holding tank (10). Washing water is introduced to the column (11) via line (14). Product (a slurry of ice crystals in water) is removed via line (12), and a slip-stream of the product, after melting (not shown) is recycled to line (14). Concentrated brine is removed via line (13).

Figure 2 shows a schematic cross-section of a preferred wash column (11) of Figure 1. The column comprises a vessel (1) provided with means for supplying a mixture of ice crystals and concentrated brine from the holding tank of Figure 1. The means shown comprise a supply pipe (2) and a pump (3). The apparatus further comprises at least one filtering element (4) located within a tube (5) such that the only means of passage of concentrated brine from the column is via exit (15) of tube (5). A packed bed of ice particles forms around filter elements (4) between lines (6a) and (6c), and in use a washing front is established at line (6b). The bed of ice crystals shifts upwards in the column, impelled by a force applied to a lengthening portion (19) of the tubes (5). In this manner, a portion (12) of the bed between (6b) and 6c) containing pure ice crystals is formed over a washing zone (13) between (6a) and (6b).

A suspension of ice crystals in washing water is discharged from the column (1) via line (8) to a melter (9) and thence to a pump (10). The resulting purified water is discharged via line (18). A portion of the purified water may be reintroduced to the column via line (11); alternatively, fresh water may be introduced via line (11) or elsewhere towards the top of the column (1). In the embodiment shown, the upper edge of the packed bed of ice crystals is continuously disintegrated by means of the stream of water entering via line (11). Alternatively or additionally, a mechanical scraper (not shown) may be provided to disintegrate the bed.

Concentrated brine leaves via exit (15) and may be recycled to the column via line (16) and pump (17).

## Claims

1. A water desalination process, which comprises:
(i) providing a stream of brine to a crystalliser;
(ii) providing a stream of liquefied natural gas, heat exchanging said stream against a secondary coolant which is a fluid initially at a higher temperature than said stream of liquefied natural gas, providing said cooled fluid as a coolant for said crystalliser, and cooling said brine to produce a mixture of ice crystals and concentrated brine; and
(iii) transferring at least part of said mixture to a wash column in which said mixture is washed with water and ice crystals are recovered.

2. A process as claimed in claim 1, in which step (iii) is carried out using a wash column comprising a concentration zone provided with (a) means for supply of said mixture, (b) one or more tubes extending from the lower portion of the concentration zone in axial direction through the concentration zone towards its upper region, one or more filtering elements being located in the wall of each tube such that the only direct connection between the interior of the tube and the concentration zone is provided by said filtering element(s); and (c) means for the removal of concentrated brine having passed through said filtering element(s); and in which the ice crystals are separated from said mixture in the column by a process which comprises:
- filtering said mixture using at least one filtering element under conditions such that a packed bed of ice crystals forms near said filtering element;
- forming a washing front by bringing a stream of washing water in countercurrent to the ice crystals in the bed, the bed being subjected to a generally upward movement in the direction of said washing front;
- disintegrating a portion of said bed, such that ice crystals are incorporated in the washing water to form a suspension; and
- removing at least part of said suspension from an upper portion of said wash column.

3. A process as claimed in claim 2, in which in step (iii) a portion of the packed bed of ice crystals is disintegrated during the washing process by using a scraper and/or at least partly under the influence of the washing water.

4. A process as claimed in either claim 2 or claim 3, in which in said wash column several filtering elements are located in tubes evenly distributed over the cross section of the column.

5. A process as claimed in any one of claims 1 to 4, in which the secondary coolant is evaporating propane; a liquid hydrocarbon; an ethylene glycol/water or ethanol/water mixture; a salt; or a cold vapour.

6. A process as claimed in claim 5, in which the secondary coolant is a liquid hydrocarbon.

7. A process as claimed in any one of claims 1 to 16, in which the crystalliser is a fluidised bed heat exchanger, a direct contact crystalliser in which a cold gas is bubbled through the brine, or a scraped surface crystalliser.

8. A process as claimed in claim 7, in which the crystalliser is a scraped surface crystalliser.

9. A process as claimed in any one of claims 1 to 8, in which the crystalliser is a vessel provided with a jacket through which the secondary liquid coolant is circulated, said liquid having been cooled to a temperature in the range of from -50 to -20°C by heat exchange with the LNG feed to the process.

10. A process as claimed in any one of claims 1 to 9, in which the brine in the crystalliser is cooled to a temperature in the range of from -2 to -10°C.

11. A process as claimed in any one of claims 1 to 10, in which the washing water is recycled melt water produced by melting ice crystals produced from the process.

12. A process as claimed in any one of claims 1 to 11, in which the brine supplied to the process is sea water.

13. Apparatus for use in a water desalination process, which comprises:
(1) a heat exchanger provided with cool side input means for liquefied natural gas, and warm side input means for a secondary coolant fluid; (2) a crystalliser having input means for a stream of brine and output means for a mixture of ice crystals and concentrated brine, and means for cooling said crystalliser using said secondary coolant fluid from heat exchanger (1); and (3) a wash column comprising a concentration zone provided with (a) means for supply of said mixture of ice crystals and concentrated brine from crystalliser (2), (b) one or more tubes extending from the lower portion of the concentration zone in axial direction through the concentration zone towards its upper region, one or more filtering elements being located in the wall of each tube such that the only direct connection between the interior of the tube and the concentration zone is provided by said filtering element(s); and (c) means for the removal of concentrated brine having in use passed through said filtering element(s); such that in use, ice crystals are separated from said mixture in said column by a process which comprises:
- supplying said mixture under conditions such that a packed bed of ice crystals forms near said filtering element(s);
- forming a washing front at the upper portion of the concentration zone by bringing a stream of washing water in countercurrent to the ice crystals in the bed, the bed being subjected to a generally upward movement in the direction of said washing front;
- disintegrating a portion of said bed, such that ice crystals are incorporated in the washing water to form a suspension; and
- removing at least part of said suspension from an upper portion of said wash column.

14. A water desalination process which comprises:
(i) providing a stream of brine to a crystalliser;
(ii) providing a stream of liquefied natural gas as a coolant for said crystalliser, and cooling said brine to produce a mixture of ice crystals and concentrated brine; and
(iii) transferring at least part of said mixture to a wash column comprising a concentration zone provided with (a) means for supply of said mixture, (b) one or more tubes extending from the lower portion of the concentration zone in axial direction through the concentration zone towards its upper region, one or more filtering elements being located in the wall of each tube such that the only direct connection between the interior of the tube and the concentration zone is provided by said filtering element(s); and (c) means for the removal of concentrated brine having passed through said filtering element(s); in which column ice crystals are separated from said mixture by a process which comprises:
- supplying said mixture under conditions such that a packed bed of ice crystals forms near said filtering element(s);
- forming a washing front at the upper portion of the concentration zone by bringing a stream of washing water in countercurrent to the ice crystals in the bed, the bed being subjected to a generally upward movement in the direction of said washing front;
- disintegrating a portion of said bed, such that ice crystals are incorporated in the washing water to form a suspension; and
- removing at least part of said suspension from an upper portion of said wash column.

15. A process as claimed in claim 14, in which in step (iii) a portion of the packed bed of ice crystals is disintegrated during the washing process by using a scraper and/or at least partly under the influence of the washing water.

16. A process as claimed in either claim 14 or claim 15, in which in said wash column several filtering elements are located in tubes evenly distributed over the cross section of the column.

17. A process as claimed in any one of claims 14 to 16, in which in step (ii), the stream of liquefied natural gas is heat exchanged against a secondary coolant which is a fluid initially at a higher temperature than said stream of liquefied natural gas, and the resulting secondary coolant is provided to said crystalliser.

18. A process as claimed in claim 17, in which the secondary coolant is evaporating propane; a liquid hydrocarbon; an ethylene glycol/water or ethanol/water mixture; a salt; or a cold vapour.

19. A process as claimed in claim 18, in which the secondary coolant is a liquid hydrocarbon.

20. A process as claimed in any one of claims 14 to 19, in which the crystalliser is a fluidised bed heat exchanger, a direct contact crystalliser in which a cold gas is bubbled through the brine, or a scraped surface crystalliser.

21. A process as claimed in claim 20, in which the crystalliser is a scraped surface crystalliser.

22. A process as claimed in any one of claims 15 to 21, in which the crystalliser is a vessel provided with a jacket through which a secondary liquid coolant is circulated, said liquid having been cooled to a temperature in the range of from -50 to -20°C by heat exchange with the LNG feed to the process.

23. A process as claimed in any one of claims 14 to 22, in which the brine in the crystalliser is cooled to a temperature in the range of from -2 to -10°C.

24. A process as claimed in any one of claims 14 to 23, in which the washing water is recycled melt water produced by melting ice crystals produced from the process of the invention.

25. A process as claimed in any one of the claims 14 to 24, in which the brine feed to the process is seawater.
